# EUROPEAN PATENT APPLICATION

(11) **EP 0 797 348 A2**
(43) Date of publication of application: **24.09.1997**
(21) Application number: 96113691.8
(22) Date of filing: 27.08.1996
(51) Int. Cl.: H04N 1/41

(54) **A one dimensional context model for entropy encoding digital halftone images with arithmetic coding**

(30) Priority: 22.03.1996 US 620636
(71) Applicant: Hewlett-Packard Company, Palo Alto, California 94304 (US)
(72) Inventor: Rust, Robert A., Boise, Idaho 83706 (US)
(74) Representative: Schoppe, Fritz, Dipl.-Ing.

(57) **Abstract**

By shuffling (204) the bits prior to compressing (205) a halftoned image, bits of like original gray values are in close proximity to each other. Thus, the compressor (402, 403) may then use one dimensional model arithmetic coding procedure thereby simplifying the arithmetic coding procedure. To accomplish the entire procedure, first the grayscale image is halftoned (203) into a bi-level image using a dither matrix (Fig. 3). The bits in the bi-level image are shuffled (204) in accordance with the dither matrix (Fig. 3) to form a shuffled image. The shuffled image is then compressed (205) using a one dimensional model arithmetic coding procedure. The steps are simply reversed to perform the decompression.

## Description

### Technical Field

The present invention relates to a method and device for arithmetically encoding and image containing halftones and, more particularly, to a one dimensional context model for entropy encoding halftones with arithmetic coding while achieving optimal compression ratios.

### Background of the Invention

Data compression systems are known in the prior art that encode a stream of digital data signals into compressed digital code signals and decode the compressed digital code signals back into the original data. Data compression refers to any process that attempts to convert data in a given format into an alternative format requiring less space than the original. The objective of data compression systems is to effect a savings in the amount of storage required to hold or the amount of time required to transmit a given body of digital information.

To be of practical utility, a general purpose digital data compression system should satisfy certain criteria. The system should have reciprocity. In order for a data compression system to possess the property of reciprocity it must be possible to re-expand or decode the compressed data back into its original form without any alteration or loss of information. The decoded and original data must be identical and indistinguishable with respect to each other. The property of reciprocity is synonymous to that of strict noiselessness used in information theory. Some applications do not require strict adherence to the property of reciprocity. One such application in particular is when dealing with graphical data. Because the human eye is not that sensitive to noise, some alteration or loss of information during the compression de-compression process is acceptable.

The system should provide sufficient performance with respect to the data rates provided by and accepted by the devices with which the data compression and de-compression systems are communicating. The rate at which data can be compressed is determined by the input data processing rate into the compression system, typically in millions of bytes per second (megabytes/sec). Sufficient performance is necessary to maintain the data rates achieved in present day disk, tape and communication systems which rates typically exceed one megabyte/sec. Thus, the data compression and de-compression system must have enough data bandwidth so as to not adversely affect the overall system. The performance of data compression and de-compression systems is typically limited by the computations necessary to compress and de-compress and the speed of the system components such as, random access memory (RAM), and the like, utilized to store statistical data and guide the compression and de-compression process. Performance for a compression device is characterized by the number of processor cycles required per input character under the compressor. The fewer the number of cycles, the higher the performance.

Another important criteria in the design of data compression and de-compression systems is compression effectiveness, which is characterized by the compression ratio. The compression ratio is the ratio of data size in uncompressed form divided by the size in compressed form. In order for data to be compressible, the data must contain redundancy. Compression effectiveness is determined by how effectively the compression procedure uses the redundancy in the input data. In typical computer stored data, redundancy occurs both in the nonuniform usage of individual symbology, example digits, bytes, or characters, and in frequent recurrence of symbol sequences, such as common words, blank record fields and the like.

General purpose data compression procedures are also known in the prior art, three relevant procedures being the Huffman method, the Tunstall method and the Lempel-Ziv method. The Huffman method is widely known and used, reference thereto in article of D.A. Huffman entitled "A Method For Construction Of Minimum Redundancy Codes", Proceedings IRE, 40, 10 pages 1098-1100 (Sept. 1952). Reference to the Tunstall algorithm may be found in Doctoral thesis of B. P. Tunstall entitled "Synthesis of Noiseless Compression Codes", Georgia Institute of Technology (Sept. 1967). Reference may be had to the Lempel-Ziv procedure in a paper authored by J. Ziv and A. Lempel entitled "A Universal Algorithm For Sequential Data Compression", IEEE Transactions on Information Theory, IT-23, 3, pages 337-343 (May, 1977).

One of the first general purpose data compression procedures developed is the Huffman method. Briefly described, the Huffman procedure maps full length segments of symbols into variable length words. The Huffman data compression procedure suffers from two limitations. Firstly, the Huffman procedure operates under the constraint that the input data to be compressed be parsed into fixed length segments of symbols. Although the Huffman procedure provides the best compression ratio that can be obtained under these constraints, when the constraint is relaxed it is possible to obtain significantly better compression ratios by utilizing other procedures. Secondly, Huffman coding requires full knowledge of the statistical characteristic of the source data. The Huffman procedure operates under the assumption that the probability with which each fixed length input segment occurs is known. This requirement of the Huffman procedure can in practice, be satisfied by the use of an adaptive version of the procedure which accumulates the necessary statistics during processing of the data. This, however, is cumbersome, and requires considerable working memory space and performs sub-optimally during adaptation.

The Tunstall algorithm, which maps variable length segments of symbols into fixed length binary words, is complimentary to the Huffman procedure with the fixed length constraints now applied to the output segments instead of the input segments. Like the Huffman procedure, the Tunstall procedure requires a foreknowledge of the source data probabilities. Again this foreknowledge requirement can be satisfied to some degree by utilizing an adaptive version which accumulates the statistics during processing of the data.

The Lempel-Ziv procedure maps variable length segments of the symbols into variable length binary words. It is asymptotically optimal when there are no constraints on the input or output segments. In this procedure the input data string is parsed into adaptively grown segments, each segment consisting of an exact copy of an earlier portion of the input string suffixed by one new symbol from the input data. The copy which is to be made is the longest possible and is not constrained to coincide with any earlier parsed segment. The code word which replaces the segment in the output contains information consisting of a pointer to where the earlier copied portion begins, the length of the copy, and the new symbol.

It would appear that Huffman or Shannon-Fano coding is the perfect means of compressing data. However, this is not the case. As mentioned above, these coding methods are optimal when and only when the symbol probabilities are integral powers of 1/2, which is usually not the case.

The technique of arithmetic coding does not have this restriction: It achieves the same effect as treating the message as one single unit (a technique which would, for Huffman coding, require enumeration of every single possible message), and thus attains the theoretical entropy bound to compression efficiency for any source.

In arithmetic coding, one decision after another is encoded to define successfully smaller, lesser included intervals along a number line. Additional information on arithmetic coding can be found in *"*An Introduction To Arithmetic Encoding*"*; by G. G. Langdon, Jr., IBM Journal of Research and Development, Vol. 28, n. 2, March 1984, 135-149; and *"*Arithmetic Compression Code Control Parameters Approximation*"*; by D. R. Helman, G. G. Langdon, Jr., and J. J. Rissanen, Vol. 23, n. 11, April 1981, 5112-5114 and U.S. Patent No. 4,905,297, "Arithmetic Coding Encoder And Decoder System", Langdon, Jr. et al. all incorporated herein by reference.

As noted in the above articles, arithmetic coding provides that each decision has a plurality of possible exclusive outcomes *"*or events*"*. Each outcome or event is represented in data by a symbol. In the imaging environment, for example, each decision may correspond to whether or not a given pixel is black. The decision outcome being represented by a Y (or YES) symbol if the pixel is black or an N (or NO) symbol if the pixel is not black. Thus, a plurality of decisions may then be represented by a sequence of symbols, e.g., YNNY...

In accordance with prior arithmetic coding teachings, a probability line has a current interval defined thereon. The first current interval is 0 to 1. The current interval is divided into segments in which segment corresponds to one possible outcome for the next decision. Where there are only two possible outcomes for each decision, the current interval is divided into two segments. The length of each segment is based on its respective associated probability. The respective probabilities may remain fixed or may adapt as decision data is entered.

It is the correlating of large segments to symbols which occur with greater frequency that leads to the compression effect. In the former cited article (*"*An Introduction To Arithmetic Encoding*"*), a 4-symbol arithmetic coding example is set forth in which each decision can result in an *"*a*"* event (having a 50% probability), a *"*b*"* event (having a 25% probability), a *"*c*"* event (having a 12.5% probability), or a *"*d*"* event (having a 12.5% probability). Representing the four events in binary form would require two bits for each decision, where the events would be represented respectively by 00, 01, 10, 11. For three decisions such as *"*aab*"* which is highly likely, the straight forward encoding data would be 00 00 01; requiring six bits. However, as observed in the article at page 137, the arithmetic coding approach permits the sequence *"*aab*"* to be represented by the value 0.001. Instead of six bits, the information can be represented in three bits. This conservation of bits results as successive events having relatively high associated probabilities occur.

The conservation deteriorates if numerous events occur for which there are low probabilities and relatively short line segments. With the above noted probabilities, a sequence of events *"*dd*"* would be represented with encoded data as 11 11 whereas, by arithmetic coding, the *"*dd*"* events would be represented by 111111. Provided that the larger segments in fact correspond to events that occur with correspondingly greater frequency, the additional bits needed for less probable symbols are outweighed by the conservation achieved when more probable symbols occur.

Images containing continuous tone grayscale must be halftone to print on bi-level printers. Halftoning is generally accomplished by using a dither matrix. A dither matrix is a two-dimensional matrix of the thresholds. The grayscale images are binarized by comparing successive pixel of a generated image signal to a corresponding threshold of the dither matrix and generating a binary signal, a dithered signal, in dependence on whether the pixel value of the image signal is greater or smaller than the corresponding threshold in the dither matrix. Thus, for a halftoned image, a single bit is allocated for each pixel in the dithered signal. Because adjacent pixels are binarized in response to different thresholds, the local density of the dithered signal will correspond to the density of the original grayscale image.

In digital halftoning and printing of continuous tone grayscale images, a tradeoff generally exists between the halftone resolutions and the number of gray levels produced. Increasing resolution to obtain greater edge detail causes a reduction in available gray levels, and a corresponding degradation in the depth and smoothness of gray contours. For additional information about digital halftoning see, " Digital Halftoning", Ulichney, R, ISBN 0-262-21009-6 (fourth printing 1993), incorporated herein by reference.

The most direct solution to increasing the halftone resolution and number of gray levels producible, is to increase the printer resolution. For instance, migrating from a 600 dpi to a 1200 dpi printer gives four times the number of available gray levels. However, additional cost of the higher resolution print mechanism and the four times increased bitmap memory requirement is incurred.

To avoid the increased bitmap memory costs by using higher resolution, an image can be halftoned in real time and sent to the printer without intermediate storage in a bitmap memory. However, other non-image elements may be present on a page, such as text and graphics. These may overlay, masks, incur, or otherwise logically operate upon the halftone images and must be stored in memory with them.

Generally, data compression can be applied to a halftone image to reduce bitmap memory requirements, with real time decompressed output sent to the printer. However, prior to the present invention most decompression systems provide relatively low compression ratio for halftone images.

### Summary of the Invention

There is provided a method for reducing memory requirements for storing a grayscale image. To accomplish the method, first the grayscale image is converted into a bi-level image using a dither matrix. The bi-level image is stored in the memory. The bits in the bi-level image are shuffled in accordance with the dither matrix to form a shuffled image. The shuffled image replaces the bi-level image in the memory. An image processor enables a compressor to retrieve the shuffled image from the memory and compress and store a compressed shuffled image in the memory.

To recover the original bi-level image, the image processor enables the compressor to retrieve the compressed shuffled image from the memory and decompress it. A replica of the shuffled image is stored in the memory. The bits of the replica of the shuffled image are shuffled in accordance with the dither matrix to form an exact replica of the bi-level image.

By shuffling the bits prior to compressing, bits of like gray values are in close proximity to each other. Thus, the compressor may use one dimensional model arithmetic coding procedure thereby simplifying the arithmetic coding procedure. Other compression procedures will also benefit by shuffling the bi-level data prior to compressing.

### Brief Description of the Drawings

A better understanding of the invention may be had from the consideration of the following detailed description taken in conjunction with the accompanying drawings in which:
FIG. 1 shows a 2X5 window.
FIG. 2 shows a 3X3 window.
FIG. 3 is an exemplary 106 LPI 600 DPI multi-dot dither matrix.
FIG. 4 show the dither matrix of Fig. 3 post shuffle.
FIG. 5 graphically represent the macro portion of the preferred embodiment shuffle process.
FIG. 6 graphically represent the micro portion of the preferred embodiment shuffle process.
FIG. 7 is logical flow chart showing the compression process in accordance with the present invention.
FIG. 8 is logical flow chart showing the decompression process in accordance with the present invention.
FIG. 9 is a block diagram showing a hardware implementation of the compression process in accordance with the present invention.
FIG. 10 is a block diagram showing a hardware implementation of the decompression process in accordance with the present invention

### Detailed Description Of The Preferred Embodiments

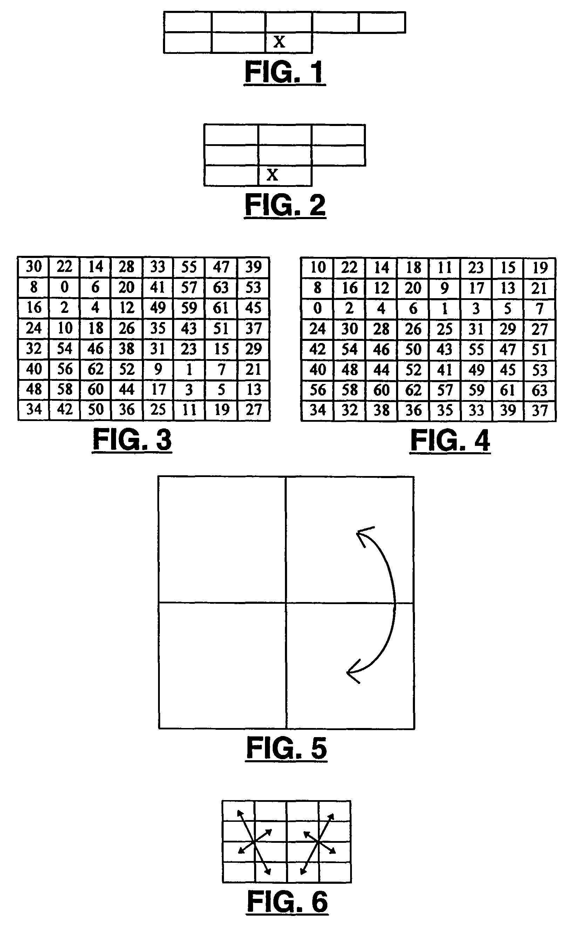

Digital halftoned images are difficult to predict because of high frequency noise associated with the dithered data. The standard approach to context models is to look at neighboring pixels. For example, JBIG uses two types of windows, a 2 x 5 and a 3 x 3 window. The diagrams of Figs. 1 and 2 show these two models respectfully. Here, pixel "X" is to be predicted. Pixels around this pixel are used to develop a prediction of X.

Both of these models were developed for text and line art. Neither is well suited for digital halftone. Primarily, the problem with digital halftoned images is that pixels around a given pixel are only partially meaningful to a prediction process. The more useful information lies around the edges of the dots being formed.

Pixels formed in the halftoning process are the result of a compare operation. The values of the compare come from the initial multi-level image data and the level in the threshold (also referred to as dither) matrix. Those values in the threshold matrix, which are similar, produce similar pixels. Thus, if a pixel is predicted based on previous pixels of similar threshold matrix levels, the ability to improve the prediction is greatly increased.

A 106 lpi 600 dpi printer matrix pattern is shown in Fig. 3. This typical threshold matrix describes the placement of the ascending order of the threshold values. Using this threshold matrix, the small numbers turn on first. Thus, only in the very light regions will the numbers 0 through 7, for example, ever be turned off.

Using the methods described above in Figs. 1 or 2, guessing the value of the pixel in location 1 is difficult. For example, using the 2x5 model of Fig. 1, pixels halftoned with the dither matrix number 38, 31, 23, 15, 29, 52, and 9 are used to develop the guess. The most meaningful pixel in this model is 9, which is spatially close to pixel 1. The other pixels are on or off for widely different gray levels.

One possible method to ensure spacial relationship between the pixel being predicted and other pixels in the model, is to construct an appropriate model. However, the construction of such a model must be dynamic, because relative pixel location and spacial relationship is not constant through the matrix of Fig. 3. In the preferred embodiment of the present invention, the halftone image, as created by threshold matrix of Fig. 3, can be shuffled such that spacially related pixels are physically located in close proximity. While the foregoing discussion relates to Figs. 3 and 4, one skilled in the art will understand after having read this description that alternative shuffle procedures may be used depending upon the actual configuration of the threshold matrix.

Referring now to Fig. 4, the threshold matrix of Fig. 3 has been shuffled. It should be noted that the halftoned image itself is shuffled not the dither matrix prior to halftoning. However, for sake of discussion, shuffling of the dither matrix shows how pixels corresponding to their threshold value during the halftone process will be shuffled. An image having its pixels shuffled in accordance with Fig. 4 places pixels of corresponding level on the same line. For example, line 3 of Fig. 4 includes pixels 0, 2, 4, 6, 1, 3, 5, and 7. At first, it may not be apparent why the lines within Fig. 4 are not ordered. While such ordering may be possible, it unnecessarily complicates the shuffle algorithm.

Once the halftone image has been shuffled, the appropriated model may be used to more accurately predict the state of a given pixel. For the threshold matrix of Fig. 3 as shuffled and shown in Fig. 4, a one dimensional context model provides information relating to those closely related pixels. For example, when predicting pixel 1 a one dimensional context model uses only the previous pixels on the same line as pixel one. Thus, the pixels corresponding to numbers 3, 5, 7, 0, 2, 4, and 6 are used to determine a prediction of the value of pixel 1. These pixels are much more meaningful for developing the MPS (Most Probable Symbol) and the degree of certainty.

Fig. 5 graphically shows the shuffling algorithm used to shuffle halftone image data in accordance with threshold matrix of Fig. 3. First, as shown in Fig. 5, pixel information in quadrants C and D are exchanged. Pixel information in quadrants A and B remain unchanged. In particular, referring back to Fig. 3, pixel information relating to threshold 39 is swapped with pixel information relating to threshold 29. Other pixel information within quadrant C and D are swapped in a similar manner. After the *"*macro*"* swap of Fig. 5, threshold data of the top line of Fig. 3 would read 30, 22, 14, 28, 31, 23, 15, and 29. Next, each quadrant undergoes a *"*micro*"* swap as graphically shown in Fig. 6. The result after processing all four quadrants is shown in Fig. 4. In particular, taking one pair of pixels for example, pixels 30 and 10 in Fig. 3 are swapped as shown in Fig. 4. The shuffle algorithm of Figs. 5 and 6 can be accomplished quickly because it is an *"*in place*"* shuffle, that is, the data is simply swapped.

One skilled in the art will know that reshuffling of the data can be accomplished by the same shuffle algorithm used to originally shuffle the data. The use of this *"*in place*"* shuffling algorithm explains why the data within Fig. 4 is not ordered. Ordering of the data in Fig. 4 may be performed, however, the additional effort of providing an ordered shuffle algorithm does not significantly increase the arithmetic compression ratio.

Some applications may eliminate the "micro" swap at expense of decreased compression efficiency. The table below shows five exemplary files processed using arithmetic coding with a macro shuffle only and with the macro and micro shuffles.

| Image | Original Size | Macro (only) | | Macro/Micro | |
|---|---|---|---|---|---|
| | | Size | Ratio | Size | Ratio |
| happy_1x | 0.63MB | 0.13MB | 4.85 | 0.10MB | 6.30 |
| happy_3x | 5.60MB | 0.80MB | 7.00 | 0.62MB | 9.03 |
| wine_1x | 1.31MB | 0.30MB | 4.37 | 0.26MB | 5.04 |
| wine_2x | 5.24MB | 1.04MB | 5.04 | 0.73MB | 7.18 |
| wine_2.5x | 8.20MB | 1.45MB | 5.66 | 1.13MB | 7.26 |

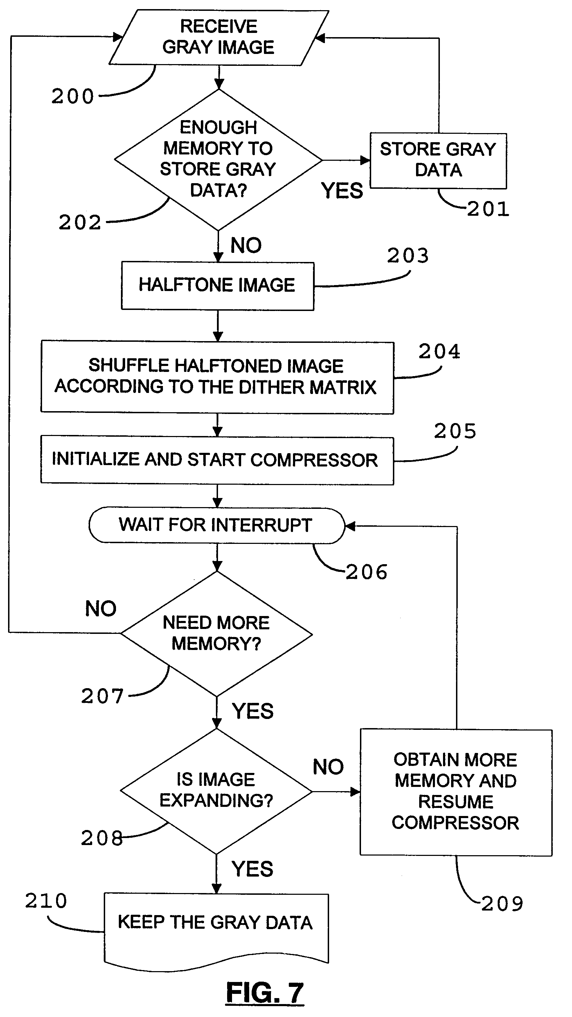

Referring now to Fig. 7, where a flow diagram of the preferred embodiment is shown. As the system receives data for a gray image 200 it must first determine if there is sufficient memory to store the gray data 202. For those situations where sufficient memory is available for storing the gray data, 201, information is simply stored without first being compressed. Typically, however, the gray image data requires storage space in excess of that currently available in the system.

First, the gray image data is passed through the halftoning process 203. The details of the halftoning process 203 are not fully described within the present application. Numerous references are available describing the halftoning process in detail, several of which have been enumerated in the background. After the image has been halftoned, the bi-level data is shuffled in accordance with the dither matrix used to perform the halftoning 204. Next, the compressor is initialized and started 205. In the environment in which the preferred embodiment has been designed for, the compressor/decompressor is performed by a hardware element. Thus, the compression process of 205 interrupts the system 206 when it needs service. If the compressor needs additional memory to store the compressed image, an inquiry will be made 207. If no additional memory is necessary, then the compressor has completed compressing the grayscale image and execution may continue at 200. In the alternative, where more memory is requested, the preferred embodiment first determines if the compression ratio is greater than 1. A compression ratio of less than 1 indicates that the compressor is actually expanding the data. For this situation the system discards the compressed data and keeps the original gray image data 210. If, on the other hand the image is being compressed (i.e. a compression ratio is greater than 1) additional memory is obtained from the memory pool and the compression process is resumed 209. Eventually, the compressor interrupts the system 206 and signify that the compression is complete 207.

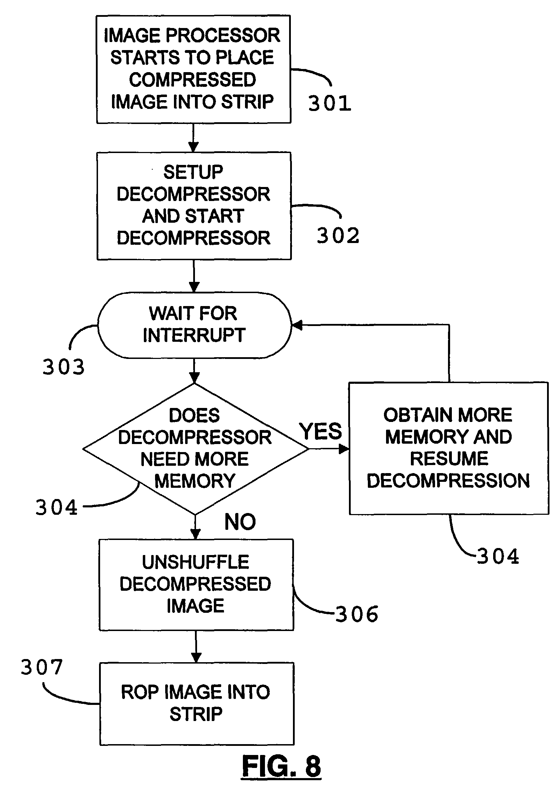

Referring now to Fig. 8, where a flow diagram of a typical decompression cycle is shown. When the image processor attempts to place a compressed image into the strip 301, the decompressor first decompresses the image 302. Eventually the compressor interrupts the image processor 303 either requesting additional information, or signaling the completion of the decompression of the compressed image. Where the decompressor request additional memory, the image processor first obtains memory from the memory pool, and restarts the decompressor 304. Once the decompressor finishes decompressing the compressed image, the image processor is interrupted 303 and instructed that the decompressor has completed the task. Next, the decompressed image must be unshuffled 306 in accordance with the dither matrix used. Finally, the uncompressed unshuffled image is ROPed (Raster Operation) into the strip.

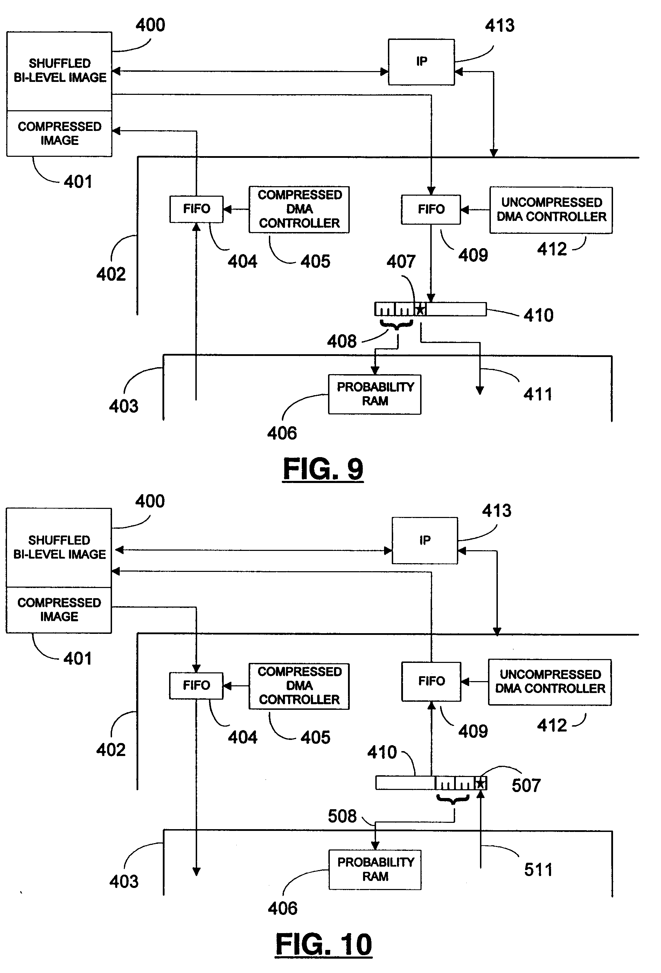

Referring now to FIG. 9, the data flow for the compression process is shown in a simplified block diagram. After Image Processor (IP) 413 has shuffled the bi-level image, it is stored in DRAM 400. Next, IP 413 initiates the compression cycle. Hardware compressor 402 requests shuffled bi-level image data from DRAM 400 under control of DMA controller 412. FIFO 409 performs an elastic buffer to compensate for different data rates between DRAM 400 and hardware compressor 402.

A single row is transferred from FIFO 409 into shift register 410. Bit 407 is currently being compressed in FIG. 9. Related bits 408 form an address for probability ram 406 of the arithmetic coding hardware 403. Based upon the output of probability ram 406 and additional arithmetic operations performed by arithmetic coding hardware 403, an MPS for bit 407 is generated. After a particular bit 407 has been compressed, data in shift register 410 is shifted allowing for a new bit to be compressed. Because the preferred embodiment of the present invention is a one dimensional context model, shift register 410 greatly simplifies the hardware implementation of the compressor.

Arithmetic coding hardware 403 passes compressed data to FIFO 404 as it is created. Under the control of DMA controller 405, data is transferred from FIFO 402 into DRAM 401. After all the data in DRAM 400 has been compressed and transferred to DRAM 401, hardware compressor 402 notifies IP 413.

Referring now to FIG. 10, the data flow for the decompression process is shown in a simplified block diagram. Here, compressed data is transferred from DRAM 401 into FIFO 404 under the control of DMA controller 405. Arithmetic coding hardware 403 decompressed the data and outputs a single bit 511 at a time.

Bit 507 is predicted based upon its relationship with bits 508. Bits 508 form an address for probability ram 406. Based upon the output of probability ram 406 and additional arithmetic operations performed by arithmetic coding hardware 403, the state of bit 507 is generated. Next, shift register 410 is shifted allowing for the next bit to be decompressed. Eventually, shift register 410 contains an entire byte of uncompressed data, which is then transferred into FIFO 409. Under the control of DMA controller 412, the uncompressed data is transferred from FIFO 409 into DRAM 400. Upon completion of decompression of compressor image 401, hardware compressor 402 notifies IP 413. IP 413 must reshuffle the shuffled bi-level image data 400. One skilled in the art will understand that the shuffle may be performed by IP 413 under the direction of firmware, or through a special purpose hardware block not shown.

One skilled in the art, after having read and understood the above will understand that while the focus has been in increasing compression ratio for arithmetic coding, the process of shuffling will also increase the compression ratio for other compression methods, such as LZ and RLE. This increase in compression ratio is a result of the increased number and length of runs of continuous one or zeros because similar gray values are grouped after the shuffle.

Although the preferred embodiment of the invention has been illustrated, and that form described, it is readily apparent to those skilled in the art that various modifications may be made therein without departing from the spirit of the invention or from the scope of the appended claims.

## Claims

1. A method for encoding a grayscale image, said method comprising the steps of:
halftoning (203) said grayscale image with a dither matrix (Fig. 3) to form a bi-level image;
shuffling (204) individual bits in said bi-level image in accordance with said dither matrix (Fig. 3) to form a shuffled image;
compressing (205) said shuffled image; and
storing (209) compressed shuffled image in a memory (401).

2. The method of claim 1 further comprising the steps of:
retrieving (301) said compressed shuffled image from said memory (401);
decompressing (302) said compressed shuffled image into a replica of said shuffled image; and
reshuffling (306) individual bits of said replica of said shuffled image in accordance with said dither matrix (Fig. 3) to form a replica of said bi-level image.

3. The method of claim 2 wherein:
said step of compressing (205) being performed using a one dimensional model arithmetic coding procedure; and
said step of decompressing (302) being performed using said one dimensional model arithmetic coding procedure.

4. A method for reducing memory requirements for storing a grayscale image, said method comprising the steps of:
converting (203) said grayscale image into a bi-level image using a dither matrix (Fig. 3);
first storing (203) said bi-level image in a memory (400);
shuffling (204) individual bits in said bi-level image in accordance with said dither matrix (Fig. 3) to form a shuffled image where said shuffled image replaces said bi-level image in said memory (400);
retrieving said shuffled image from said memory (400);
compressing (205) said shuffled image into a compressed shuffled image, and
storing said compressed shuffled image in said memory (401).

5. The method of claim 4 further comprising the steps of:
reading said compressed shuffled image from said memory (401);
decompressing (302) said compressed shuffled image into a replica of said shuffled image; and
reshuffling (306) individual bits of said replica of said shuffled image in accordance with said dither matrix (Fig. 3) to form a replica of said bi-level image.

6. The method of claim 5 wherein:
said step of compressing (205) being performed using a one dimensional model arithmetic coding procedure and
said step of decompressing (302) being performed using said one dimensional model arithmetic coding procedure.

7. An apparatus for reducing memory requirement for storing a grayscale image, said apparatus comprising:
a memory (400, 401)
a compressor (402, 403); and
an image processor means (413) attached to said memory (400, 401) and said compressor (402, 403), said image processor means (413) for converting (203) said grayscale image into a bi-level image using a dither matrix (Fig. 3) where said bi-level image being stored in said memory (400), shuffling (204) individual bits in said bi-level image in accordance with said dither matrix (Fig. 3) to form a shuffled image where said shuffled image replaces said bi-level image in said memory (400), said image processor means (413) enabling said compressor (402, 403) to retrieve (409, 412) said shuffled image from said memory (400) and compress (205) and store (405, 404) a compressed shuffled image in said memory (401).

8. The apparatus as claimed in claim 7, wherein said image processor means (413) enabling said compressor (402, 403) to retrieve (404, 405) said compressed shuffled image from said memory (401) and decompress (302) and store a replica of said shuffled image in said memory (400), said image processor means (413) reshuffling (306) individual bits of said replica of said shuffled image in accordance with said dither matrix (Fig. 3) to form a replica of said bi-level image.

9. The apparatus as claimed in claim 8, wherein said compressor (402, 403) using a one dimensional model arithmetic coding procedure.
